# FASCICULE DE BREVET EUROPEEN

(11) **EP 4 048 910 B1**
(45) Date de publication et mention de la délivrance du brevet: **01.11.2023**
(21) Numéro de dépôt: 20792443.2
(22) Date de dépôt: 22.10.2020
(51) Int. Cl.: F16B 21/18, F16L 37/091

(54) **DISPOSITIF DE RACCORDEMENT A ACCES EXTERIEUR A UNE BAGUE D'ANCRAGE, ENSEMBLE ET PROCEDE DE DEMONTAGE CORRESPONDANTS**
VERBINDUNGSVORRICHTUNG MIT EXTERNEM ZUGANG ZU EINEM VERANKERUNGSRING, ENTSPRECHENDE MONTAGE- UND ENTFERNUNGSVERFAHREN
CONNECTION DEVICE WITH EXTERNAL ACCESS TO AN ANCHORING RING, CORRESPONDING ASSEMBLY AND REMOVAL METHOD

(30) Priorité: 24.10.2019 FR 1911944
(43) Date de publication de la demande: 31.08.2022
(73) Titulaire: Parker Hannifin EMEA S.à.r.l., 1163 Etoy (CH)
(72) Inventeur: LE QUERE, Philippe, 35830 BETTON (FR)
(74) Mandataire: Decorchemont, Audrey Véronique Christèle
(86) Numéro de dépôt international: PCT/EP2020/079680
(87) Numéro de publication internationale: WO 2021/078824

(56) Documents cités:
- EP-A1- 2 966 332
- WO-A1-2011/003779
- FR-A5- 2 102 518

## Description

La présente invention concerne le domaine du transport de fluides liquides ou gazeux et plus particulièrement, bien que non exclusivement, les dispositifs de raccordement de conduits de transport de fluide entre eux, ces conduits étant définis dans des éléments de circuit émetteurs ou récepteurs de fluide.

### ARRIERE PLAN DE L'INVENTION

Il est connu des dispositifs de raccordement tels que ceux décrits par FR2102518 A5 et EP2966332 A1 comprenant un insert tubulaire pourvu extérieurement de moyens d'ancrage dans un puits d'élément de circuit, les moyens d'ancrage comprenant une bague d'accrochage fixée à l'insert et pourvue de dents saillant extérieurement d'un corps de la bague pour venir au contact du puits. Une telle bague permet ainsi de bloquer l'insert dans le puits.

Lorsque l'on souhaite retirer l'insert, on vient usuellement visser un écrou sur un filetage externe d'une extrémité de l'insert agencée hors du puits de manière à dévisser l'insert du puits et à l'en extraire.

L'inconvénient est qu'au cours de cette opération, la bague d'accrochage vient frotter sur la surface du puits tout le long de son extraction ce qui abîme profondément ladite surface. Ainsi le puits ne va plus pouvoir assurer les mêmes performances d'ancrage si un nouvel insert est introduit ultérieurement.

En outre, des copeaux de matière provenant de l'arrachage de la surface du puits par la bague d'accrochage peuvent tomber dans le puits et le fluide qu'il contient, entraînant une pollution dudit fluide et donc potentiellement un dysfonctionnement d'appareils raccordés audit puits.

### OBJET DE L'INVENTION

Un but de l'invention est de proposer un dispositif de raccordement limitant un risque d'abîmer un élément de circuit dans lequel le dispositif de raccordement sera agencé lors de l'extraction de celui-ci.

Un but de l'invention est également de proposer un ensemble d'un tel dispositif et d'un pion pour la solidarisation temporaire d'un insert et d'une bague dudit dispositif. Un but de l'invention est également de proposer un procédé de démontage d'un insert d'un tel dispositif d'un élément de circuit.

### RESUME DE L'INVENTION

En vue de la réalisation de ce but, on propose, selon l'invention, un dispositif de raccordement d'un premier élément de circuit à un deuxième élément de circuit, le dispositif comprenant un insert pourvu extérieurement de moyens d'ancrage dans un puits du premier élément de circuit, les moyens d'ancrage comprenant une bague d'accrochage pourvue de dents saillant extérieurement d'un corps de la bague pour venir au contact du puits, les parties des dents en contact avec le puits s'étendant en pente entre deux extrémités axiales du puits et la bague étant montée libre en rotation dans une gorge de l'insert, l'insert comprenant au moins une encoche par laquelle on peut accéder à la bague par l'extérieur du dispositif lorsque le dispositif est raccordé au premier élément de circuit afin d'y agencer de manière temporaire au moins un pion de solidarisation en rotation de la bague à l'insert. De la sorte, une fois le pion introduit dans l'encoche pour venir au contact de la bague et ainsi solidariser en rotation bague et insert, il est possible de dévisser en bloc bague et insert en agissant sur une extrémité de l'insert agencé hors du premier élément. La forme inclinée des parties des dents en contact avec le premier élément facilite l'extraction de l'insert en formant artificiellement au moins un tronçon de filet de vis pour la bague. La bague glisse ainsi plus facilement sur la paroi du premier élément ce qui limite un risque qu'elle ne l'abîme et ne vienne en conséquence polluer le fluide. Optionnellement la bague comporte elle-même au moins une encoche destinée à recevoir au moins en partie le pion de solidarisation.

Optionnellement l'encoche forme une fente dans la bague ou est un espace délimité par deux dents de la bague. Optionnellement l'encoche s'étend sur toute la hauteur de la bague.

Optionnellement au moins l'une des dents est formée par découpe du corps de bague puis pliage et/ou conformage dudit corps.

Optionnellement au moins une des dents est bombée. Optionnellement l'encoche de l'insert est un perçage traversant l'insert depuis l'extérieur de l'insert jusqu'à déboucher dans la gorge de l'insert recevant la bague. Optionnellement l'encoche de l'insert est une rainure ménagée dans au moins une paroi externe de l'insert.

L'invention concerne également un ensemble d'un dispositif tel que précité et un pion pour la solidarisation de la bague et de l'insert.

Optionnellement une extrémité libre du pion est biseautée, pointue ou bien encore arrondie.

Optionnellement le pion est formé d'une lame ou d'un fil. Optionnellement le pion présente une hauteur correspondant sensiblement à celle de la gorge de réception de la bague dans le puit.

Optionnellement le pion forme l'extrémité d'un outil de démontage du dispositif.

Optionnellement l'outil présente un manche prolongé d'une jambe de jonction au pion.

L'invention concerne également un procédé de démontage de l'insert comprenant les étapes de solidariser l'insert et la bague par l'intermédiaire du pion, puis de dévisser l'insert.

D'autres caractéristiques et avantages de l'invention ressortiront à la lecture de la description qui suit d'un mode de réalisation particulier non limitatif de l'invention.

### BREVE DESCRIPTION DES DESSINS

L'invention sera mieux comprise à la lumière de la description qui suit en référence aux figures annexées parmi lesquelles :
- la figure 1 est une vue en coupe longitudinale d'un dispositif de raccordement selon un mode de réalisation particulier de l'invention raccordé à un élément de circuit ;
- la figure 2a est une vue en perspective d'une bague d'accrochage du dispositif illustré à la figure 1 ;
- la figure 2b illustre une première variante de la bague représentée en figure 2a ;
- la figure 2c illustre une deuxième variante de la bague représentée en figure 2a ;
- la figure 3a est une vue en coupe longitudinale d'une partie du dispositif illustré à la figure 1 lorsqu'un pion de solidarisation de la bague à l'insert est introduit dans le dispositif ;
- la figure 3b est une vue analogue à celle de la figure 3a proposant une variante du pion de solidarisation ;
- la figure 4a est une vue en coupe longitudinale du dispositif illustré à la figure 1 lors de l'insertion d'un pion de solidarisation selon un mode de réalisation particulier de l'invention ;
- la figure 4b est une vue analogue à la figure 4a lorsque le pion de solidarisation est inséré et qu'un outil de désolidarisation est utilisé pour dévisser l'insert ;
- la figure 5 est une vue en coupe longitudinale de la moitié d'un dispositif de raccordement selon une variante de l'invention raccordé à un élément de circuit.

### DESCRIPTION DETAILLEE DE L'INVENTION

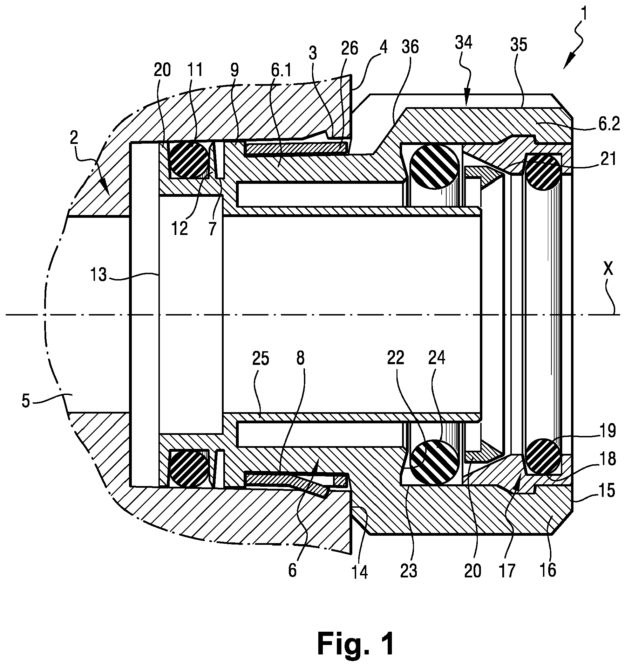

En référence à la figure 1, un dispositif de raccordement selon un mode de réalisation particulier de l'invention, généralement désigné en 1, est destiné à équiper un premier élément 2 d'un circuit de transport de fluide.

Le circuit est par exemple un circuit de transport de fluide de freinage et optionnellement un circuit de transport de fluide de freinage pour poids lourd. Le fluide est ici de l'air comprimé.

Cette application n'est bien entendu pas limitative et l'on pourra utiliser le dispositif 1 en association avec tout autre type de circuit et tout autre type de fluide.

Le premier élément 2 est un élément émetteur et/ou récepteur de fluide comme une vanne, un collecteur, un filtre, une pompe, un réservoir, un distributeur, un actionneur, un régulateur de débit, un régulateur de pression, un capteur d'état de fluide, un témoin de pression... Le premier élément 2 comprend un puits 3 ayant une extrémité débouchant sur une face 4 de l'élément de circuit 2 et une extrémité opposée débouchant dans un canal 5 s'étendant dans le premier élément de circuit 2. Le puits 3 présente ici une section conique.

Le dispositif de raccordement comprend un insert 6 de forme tubulaire ayant un premier tronçon 6.1 de liaison au puits 3 et un deuxième tronçon 6.2 de liaison à un deuxième élément du circuit (non représentée ici). Les deux tronçons 6.1, 6.2 sont d'une seule pièce.

Le deuxième élément est un élément émetteur et/ou récepteur de fluide est par exemple un tube.

L'insert 6 est par exemple en matière plastique. L'insert 6 est typiquement moulé par injection de matière plastique. Dans le cas présent le puits 3, le tube et l'insert 6 (et donc ses deux tronçons 6.1 et 6.2) sont coaxiaux à un axe général rectiligne X.

Le premier tronçon 6.1 est engagé de manière amovible et étanche dans le puits 3. Le premier tronçon est ainsi pourvu de gorges annulaires 7, 8. La gorge 8 est délimitée entre le tronçon 6.2 et une collerette 9 et la gorge 7 est délimitée entre la collerette 9 et une collerette 10 formant par ailleurs également la portion terminale libre 13 du premier tronçon 6.1. La gorge 7 reçoit un joint d'étanchéité 11 destiné à assurer une étanchéité entre le premier tronçon 6.1 et le premier élément 2. La gorge 7 est par ailleurs munie d'une lèvre 12 de protection du joint d'étanchéité 11, lèvre 12 s'étendant donc entre le joint d'étanchéité 11 et la collerette 9 et de manière coaxiale audit joint d'étanchéité 11. La lèvre 12 est ainsi flexible.

Optionnellement au moins la portion terminale libre 13 de l'insert 6 a un diamètre externe sensiblement égal au diamètre interne du puits 3.

La portion terminale libre 13 sert ainsi de guidage à l'insert 6 dans de son introduction dans le puits 3.

Le deuxième tronçon 6.2 s'étend dans le prolongement du premier tronçon 6.1 en formant un épaulement 14 avec celui-ci, épaulement 14 venant reposer contre la face 4 du premier élément 2, la gorge 8 du premier tronçon 6.1 s'étendant jusqu'au niveau de l'épaulement 14.

Le deuxième tronçon 6.2 s'étend donc hors du puits 3 et présente une extrémité débouchant sur une face 15 de l'insert 6 et une extrémité opposée raccordée au premier tronçon 6.1. Le deuxième tronçon 6.2 comporte notamment une portion terminale libre 16 de section extérieure hexagonale se terminant par la face 15.

Le deuxième tronçon 6.2 est pourvu intérieurement, de manière connue en soi, d'un organe de connexion instantanée comportant un élément de retenue élastique de l'extrémité de tube introduite dans l'insert 6.

Dans le cas présent, l'organe de connexion comporte une douille 17 agencée jusqu'au niveau de la face 15. La douille 17 est ainsi munie côté ouverture de l'insert 6 vers l'extérieur d'une gorge 18 recevant un joint antipollution 19 pour la protection interne de l'insert 6 et côté opposé d'un jonc d'accrochage 20 du tube à raccorder, jonc d'accrochage 20 formant élément de retenue élastique. La douille 17 comporte à cet effet une portion conformée en un cône de verrouillage 21 du jonc d'accrochage 20 dans la douille 17.

Entre la douille 17 et un épaulement 22 interne à niveau du raccordement des deux tronçons 6.1 et 6.2, le deuxième tronçon 6.2 est muni intérieurement d'une gorge 23 pour la réception d'un joint d'étanchéité 24 afin d'assurer une étanchéité entre l'extrémité de tube et l'insert 6. Optionnellement le premier tronçon 6.1 est muni intérieurement d'une paroi tubulaire 25 formant guidage d'une paroi interne du tube lorsque le tube est introduit dans l'insert 6. La paroi tubulaire 25 s'étend ici depuis le niveau de la collerette 9 jusqu'à niveau sensiblement du jonc d'accrochage 20. Lorsque le tube est connecté, son extrémité est ainsi emprisonnée entre ladite paroi tubulaire 25 d'une part et la paroi interne du premier tronçon 6.1, le joint d'étanchéité 24 et le jonc d'accrochage 20 d'autre part.

L'insert 6 est pourvu par ailleurs de moyens d'ancrage de l'insert 6 au puits 3, les moyens d'ancrage comprenant une bague 26 d'accrochage qui, conformément à la figure 1, est logée au fond de la gorge 8 du premier tronçon 6.1 en venant en butée contre la collerette 9.

La bague 26 comporte ici un corps annulaire 27 duquel s'étend en saillie vers l'extérieur une pluralité de dents 28 (une partie seulement étant référencée ici) formant des moyens de retenue axiaux de l'insert 6 dans le puits 3. En position de repos de la bague 26, les dents 28 forment ainsi un angle non nul avec le corps annulaire 27.

Le corps annulaire 27 de la bague 26 présente un diamètre extérieur (hors dents saillants) légèrement inférieur à celui de la collerette 9. Le diamètre intérieur de la bague 26 est par ailleurs légèrement supérieur à celui de la gorge 8 afin d'autoriser une rotation relative autour de l'axe X entre l'insert 6 et la bague 26.

Les parties des dents (une partie seulement étant référencée ici) en contact avec le puits 3, que l'on peut aussi appeler extrémités d'accroche 29 des dents, s'étendent en pente entre deux extrémités axiales du puits 3. De la sorte lesdites extrémités d'accroche 29 ne sont ni coaxiales à la direction axiale du puits 3 (ici l'axe X) ni orthogonales à ladite direction. Elles sont en effet avantageusement inclinées entre deux plans parallèles ayant pour normale la direction axiale du puits 3.

Elles permettent en conséquence de faciliter le dévissage de la bague 26 du tube en formant artificiellement au moins un tronçon de filet de vis pour la bague 26.

On retient que les extrémités d'accroche 29 sont ici toutes orientées de la même manière.

De la même manière, dans le cas présent, les extrémités d'accroche 29 présentent toutes une même pente.

Les dents 28 sont donc ici toutes identiques. Optionnellement, les extrémités d'accroche 29 s'étendent en pente également entre deux extrémités axiales de la bague 26 soit ses deux faces planes d'extrémité axiale. Au moins les dents 28, et préférentiellement toute la bague 26, est dans une matière élastiquement déformable. Au moins les dents 28 sont ainsi flexibles.

La bague 26 peut être réalisée en métal (et par exemple en acier inoxydable) ou dans un autre matériau. Par exemple la bague 26 est fabriquée par découpe et formage d'une tôle métallique. La bague 26 présente donc une faible épaisseur (selon la direction radiale).

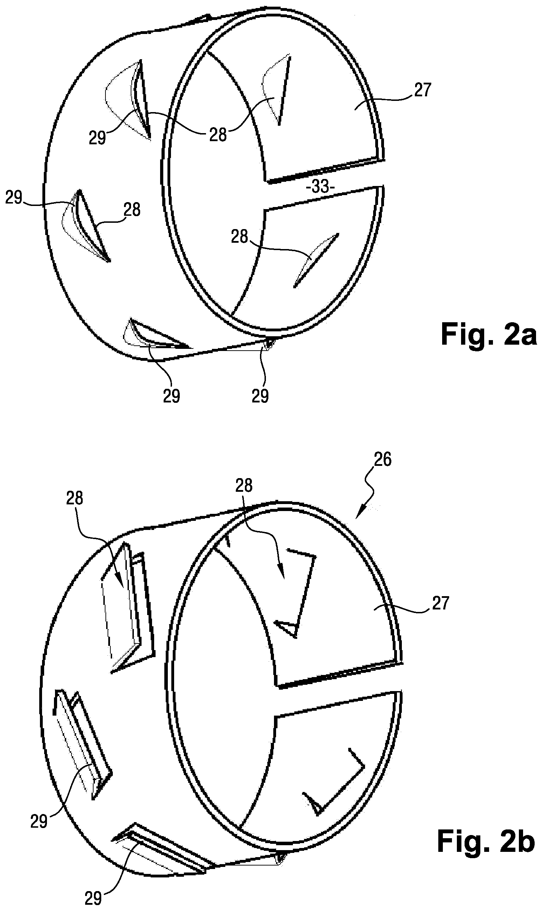

Selon un mode de réalisation particulier de l'invention et conformément à la figure 2a, les dents 28 sont formées par découpe du corps annulaire 27 et pliage et/ou conformage desdites découpes. La bague 26 présente ainsi des perçages surmontés de portions saillantes formant les dents 28.

De façon particulière, les dents 28 sont agencées sur la bague 26 le long de deux hélices distinctes, deux dents 28 successives étant agencées l'une sur l'hélice supérieure et l'autre sur l'hélice inférieure. L'agencement en hélices des différentes dents 28 facilite le dévissage de l'insert 6. Les dents 28 forment ainsi deux filets de vis pour la bague 26, filets s'étendant sensiblement sur toute la longueur (selon la direction axiale) de la bague 26. Optionnellement, les dents 28 sont bombées : les surfaces externes des dents 28 sont ainsi arrondies. Les dents 28 sont globalement en forme de coquille ouverte à une extrémité. Les extrémités d'accroche 29 sont donc également conformées sensiblement en arc de cercle.

Une première variante de cette bague est représentée à la figure 2b. Cette première variante est identique à la bague précédemment décrite en référence à la figure 2a à la différence que les dents 28 ne sont pas bombées mais planes. Les extrémités d'accroche 29 s'étendent donc rectilignement.

Les dents 28 forment ici des languettes mais les dents pourront présenter des faces principales autres que rectangulaires comme par exemple carrées, circulaires ...

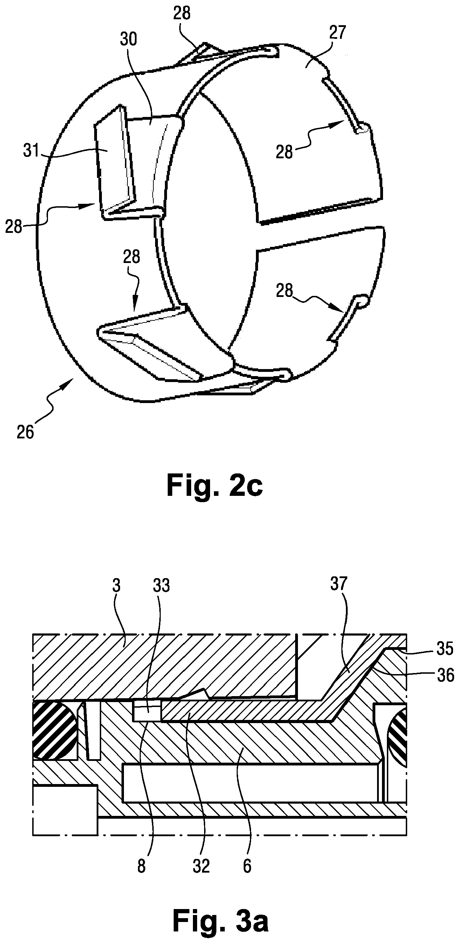

Une deuxième variante de cette bague est représentée à la figure 2c. A la différence des bagues des figures 2a et 2b, le corps annulaire 27 ne comporte pas de perçage. Les dents 28 sont formées ici par découpe d'une extrémité du corps annulaire 27 et pliage de lamelles du corps annulaire 27 issues de cette découpe pour former des pattes d'une seule pièce avec le corps annulaire 27.

Les pattes comportent typiquement une bande 30 s'étendant axialement et extérieurement au corps annulaire 27 et comprenant donc une première extrémité d'attache à l'une des faces d'extrémité axiale de la bague. La deuxième extrémité de la bande 30 est prolongée par un secteur 31 formant un angle non nul avec la bande 30, l'extrémité libre du secteur 31 définissant la partie de la dent destinée à être en contact avec le puits 3.

Dans le cas présent, les secteurs 31 ont la même forme que les dents 28 de la première variante illustrée à la figure 2b. Les secteurs 31 sont donc plans et en forme de languette. Les extrémités d'accroche 29 s'étendent rectilignement.

En référence de nouveau à la figure 1 et à la figure 2a, on comprend qu'en cas de tentative d'extraction de l'insert 6 hors du puits 3 les dents 28 viennent frotter contre la paroi du puits 3. Néanmoins l'insert 6 demeure libre en rotation vis-à-vis de la bague 26 et donc du puits 3 autour de l'axe X.

On limite ainsi le risque qu'une action sur le tube n'entraine accidentellement un dévissage de la bague 26. Afin de pouvoir retirer l'insert 6 du puits 3 sans dégradation ni de l'insert 6 ni du puits 3, le dispositif 1 est conformé pour assurer une solidarisation temporaire en rotation de la bague 26 à l'insert 6 lors du dévissage de celui-ci. Ainsi lors du dévissage de l'insert 6, la bague 26 est également dévissée solidairement avec l'insert 6 : ses dents glissent le long de la surface du puits 3 grâce à leurs formes inclinées en dessinant par ailleurs une trajectoire hélicoïdale facilitant le dévissage de l'insert 6.A cet effet, la bague 26 et l'insert 6 sont conformés pour pouvoir être liés temporairement en rotation par un pion 32 visible à la figure 3a.

Dans le cas présent, la bague 26 comporte au moins une encoche 33 ménagée dans le corps annulaire 27 selon une direction axiale. Ici la bague 26 comporte une seule encoche 33.

L'encoche 33 s'étend sur toute la longueur (selon la direction axiale) du corps annulaire 27 de sorte à déboucher sur les deux faces d'extrémité axiales de la bague. La bague 26 est donc ici entièrement fendue. De façon avantageuse, la fente 33 de la bague 26 facilite son agencement dans la gorge 8 de l'insert 6 en autorisant une ouverture élastique de la bague 26.

De manière correspondante, au moins une encoche 34 est ménagée le long de l'insert 6 pour pouvoir accéder à la bague 26 par l'extérieur du dispositif 1 lorsque le dispositif 1 est raccordé au premier élément 2 et plus particulièrement pour pouvoir accéder à la fente 33 de la bague 26.

L'encoche 34 est ici ouverte de sorte à être ménagée extérieurement le long de l'insert 6 pour déboucher à une première extrémité dans une zone de l'insert 6 agencée hors du puits 3 et à déboucher à une deuxième extrémité dans la gorge 8 dans laquelle est agencée la bague 26.

Dans le cas présent, l'encoche 34 comporte un premier segment 35 ménagé extérieurement dans le deuxième tronçon 6.2 de sorte à s'étendre rectilignement selon une direction axiale. Ce premier segment 35 est prolongé d'un deuxième segment 36 ménagé extérieurement dans l'épaulement 14 de sorte à s'étendre rectilignement entre le premier tronçon 6.1 et le deuxième tronçon 6.2 pour déboucher dans la gorge 8. En conséquence le deuxième segment 6.2 s'étend de manière inclinée relativement à la direction axiale de l'insert 6.

On va à présent s'attacher à décrire le pion 32 de solidarisation en rotation de la bague 26 à l'insert 6. Ledit pion 32 est en particulier destiné à être agencé au moins en partie dans la fente 33 de la bague 26 de manière à reposer sur un fond de la gorge 8 de l'insert 6. Préférentiellement, l'extrémité libre du pion 32, soit l'extrémité du pion 32 pénétrant en première dans le dispositif pour atteindre la bague, est conformée pour faciliter son insertion. Ladite extrémité est par exemple biseautée, pointue ou bien encore arrondie.

De manière générale, la section transversale du pion 32 peut être de toute forme : carré, rectangulaire, ronde ... Le pion 32 peut ainsi être en tous matériaux (métal, plastique chargé, plastique non chargé ...)

Le pion 32 peut ainsi être une lame c'est-à-dire présenter une section transversale rectangulaire. La lame peut être en tôle ou bien une lame en plastique et être par exemple fabriquée par injection.

Le pion 32 peut aussi être formé d'un fil c'est-à-dire présenter une section transversale circulaire. Le fil peut alors en métal.

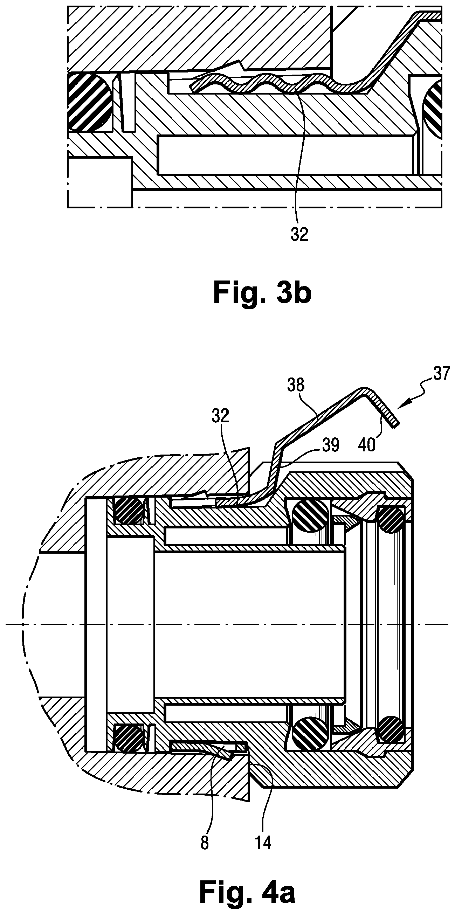

Comme visible à la figure 3a, le pion 32 est plan. Néanmoins, selon une variante, et comme illustré à la figure 3b, le pion 32 peut être également non plan et par exemple présenter une ou des ondulations.

Selon la forme et les dimensions du pion 32, le pion 32 peut être flexible ou rigide. Par exemple si le pion 32 est formé d'une lame à ondulations, le pion 32 est relativement flexible.

Dans tous les cas, quelle que soit la forme du pion 32, le pion 32 est de dimensions adaptées pour être agencé de manière ajustée dans la fente 33. On préfère ainsi avoir un pion 32 de largeur sensiblement identique à celle de la fente 33 (selon une direction circonférentielle) lorsque la bague 26 est en place sur l'insert 6 afin que le pion 32 puisse agir sur les deux bords du corps annulaire 27 définissant la fente 33.

De préférence, le pion 32 présente une hauteur (selon la direction radiale) correspondant sensiblement à celle de la hauteur de la gorge 8 de l'insert 6 dans laquelle la bague 26 est agencée. Le pion 32 présente une hauteur au moins supérieure à celle de l'encoche 33 et à celle de la bague 26. On voit que selon la forme du pion 32 la hauteur est l'épaisseur propre du pion 32 (comme illustré à la figure 3a) ou bien l'épaisseur générale du pion 32 vu sa conformité (comme illustré à la figure 3b, l'épaisseur propre du pion 32 est inférieure à celle de la gorge 8 mais l'épaisseur globale du pion 32, soit le double de l'amplitude des ondulations, est bien sensiblement égale à celle de la gorge 8).

De préférence, et pour les deux possibilités de pion 32 illustrées aux figures 3a à 3c, le pion 32 forme l'extrémité d'un outil 37 de démontage du dispositif 1.

L'outil 37 présente à cette fin un manche 38 prolongé d'une jambe 39 de jonction au pion 32. Au moins la jambe 39 est flexible de sorte qu'une déformation élastique de la jambe 39 permet de disposer le pion 32 et le manche 38 de part et d'autre de la zone de jonction entre les tronçons 6.1 et 6.2 et plus particulièrement d'agencer le pion 32 dans la fente 33 et le manche 38 le long du deuxième tronçon 6.2 extérieurement à celui-ci. La jambe 39 peut être réalisée en matière plastique, en métal ou tout autre matériau.

De préférence c'est tout l'outil 37 qui est flexible. L'outil 37 est ici réalisé par pliage d'une lame.

Optionnellement l'outil 37 est réalisé par pliage d'une lame (métallique ou non) ou d'un fil (métallique ou non). Plus précisément ici l'outil 37 comporte le pion 32 s'étendant rectilignement dans la gorge 8 du premier tronçon 6.1 depuis l'épaulement 14 jusqu'au moins l'intérieur de la fente 33. Le pion 32 repose donc sur le fond de la gorge 8.

Optionnellement le pion 32 peut venir sensiblement à niveau de la collerette 9, voir contre la collerette 9, de sorte à s'étendre sur toute la longueur de la gorge 8 ou peut être d'une longueur inférieure à celle de la gorge 8 de sorte que son extrémité libre se trouve logée dans la fente 33.

Une extrémité du pion 32 opposée à son extrémité libre est liée à la jambe 39 qui est ici conformée de sorte à épouser la forme du deuxième segment 36 de l'encoche 34, la jambe 39 reposant donc sur un fond du deuxième segment 36 en s'étendant sur tout le long dudit deuxième segment 36. L'extrémité de la jambe 39 opposée à celle liée au pion 32 est donc liée au manche 38 qui s'étend de manière à épouser la forme du premier segment 35, le manche 38 reposant donc sur un fond du premier segment 35.

De préférence le premier segment 35 débouche à son extrémité opposée à celle reliée au deuxième segment 36 sur la face d'extrémité latérale 15, le manche 38 étant prolongé d'un rebord 40 apte à venir reposer extérieurement contre ladite face.

En service comme illustré à la figure 4a, si l'on souhaite démonter l'insert 6, on vient introduire l'outil 37 dans le dispositif 1 en introduisant en premier le pion 32 dans le chemin d'accès à la bague 26 formé par l'encoche 34.

Lorsque le pion 32 atteint la bague 26, l'insert 6 peut potentiellement être pivoté autour de son axe X afin de mettre en alignement la fente 33 avec l'encoche 34.

Une fois cet alignement effectué, l'outil 37 est davantage enfoncé dans le dispositif 1 jusqu'à ce que la jambe 39 puisse venir reposer dans le deuxième segment 36. A ce moment le pion 32 se trouve alors dans la fente 33 en contact des bords du corps annulaire 27 définissant la fente.

On vient ensuite positionner le manche 38 et le rebord 40 contre le deuxième tronçon 6.2 entraînant un blocage de l'outil 37 sur l'insert 6, notamment du fait que l'outil 37 enserre le deuxième tronçon 6.2 entre sa jambe 39 et son rebord 40. On a ainsi encliqueté l'outil 37 sur l'insert 6.

Dans cette position l'outil 37 bloque également en rotation la bague 26 sur l'insert 6, le pion 32 étant inséré dans la fente 33.

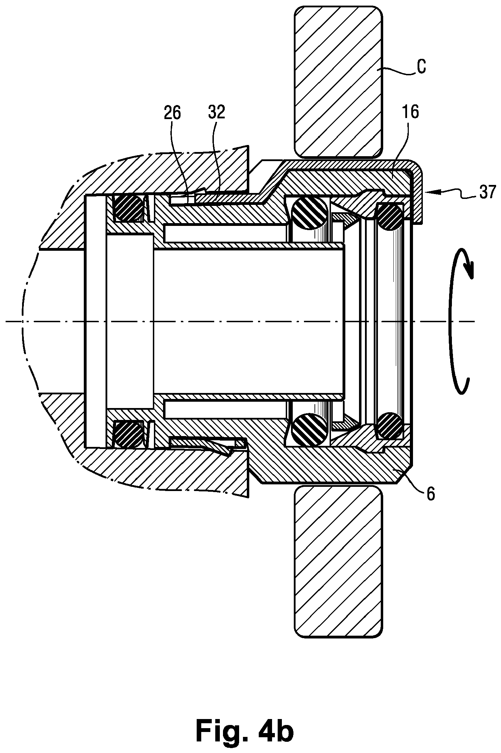

En référence à la figure 4b, on vient alors placer une clé C sur la partie hexagonale 16 du deuxième tronçon 6.2 afin de le dévisser provoquant un retrait en bloc de l'insert 6 et de la bague 26. La clé C utilisée est une clé plate standard qui ne sera donc pas détaillée.

On peut alors introduire un nouvel insert 6 dans le puits 3.

On a ainsi proposé une solution simple et économique de dévissage d'un insert 6 d'un puits 3 en limitant un risque d'abîmer celui-ci lors du retrait de l'insert 6.

Bien entendu l'invention n'est pas limitée au mode de réalisation décrit et on peut y apporter des variantes sans sortir du cadre de l'invention tel que défini par les revendications.

En particulier la bague pourra prendre une autre forme que celle indiquée. Ainsi bien qu'ici à l'état de repos, la bague présente un corps annulaire, le corps de la bague pourra être conformé en une spirale s'étendant en service optionnellement mais préférentiellement co-axialement au corps de l'insert. On pourra également avoir à l'état de repos une bague présentant un corps annulaire et une gorge de l'insert conformée de sorte à provoquer une torsion de la bague lorsque celle-ci est en place dans la gorge, la bague dessinant alors une spirale. Dans ce cas de figure, les dents pourront elles-mêmes ne pas être en pente entre les deux faces d'extrémité axiales de la bague lorsque celle-ci est à l'état de repos. C'est alors le fait de conformer le corps de la bague en spirale qui permettra aux dents de former artificiellement au moins un tronçon de filet pour l'insert.

Par ailleurs, les dents pourront prendre toute autre forme et tout autre agencement que ceux illustrés à condition de faciliter le dévissage de l'insert. Ainsi bien qu'ici les dents soient alignées sur plusieurs hélices artificielles, les dents pourront être alignées selon une seule hélice ou selon un nombre d'hélices plus important. Bien qu'ici les dents soient alignées le long d'au moins une hélice artificielle, les dents pourront en complément ou en remplacement être alignées sur au moins une ligne, au moins un cercle ... et/ou être agencées de manière aléatoire sur le corps de bague. Chaque bague pourra ainsi former de manière individuelle un tronçon de filet de vis. On préférera toutefois qu'au moins deux dents soient alignées sur un même filet de vis (soit par un agencement naturel des dents en hélice sur le corps de bague soit lors de la conformation en spirale du corps de bague sur l'insert) pour faciliter le retrait de l'insert. Préférentiellement, les dents seront alignées sur un nombre restreint de filets de vis compris par exemple entre 1 et 5.

Une même bague pourra ainsi comprendre des dents différentes entre elles. Ainsi bien qu'ici toutes les dents soient en pente entre les deux extrémités axiales du puit, seule une partie desdites dents pourront être en pente. On privilégiera toutefois un mode de réalisation dans lequel toutes les dents sont en pente entre les deux extrémités axiales du puit.

Par ailleurs la bague pourra ne pas être fendue sur toute sa longueur mais sur une partie seulement. La bague pourra simplement comporter au moins une encoche qui ne débouchera qu'au niveau d'une des faces d'extrémités latérales de la bague, celle la plus proche de l'extrémité ouverte du puits. La bague pourra ne pas être fendue, l'encoche ne débouchant alors pas au niveau de la surface interne ou externe de la bague. L'encoche pourra ainsi délimiter une rainure (externe ou interne) plutôt qu'une ouverture. De la même manière l'encoche pourra ne déboucher ni au niveau de la surface interne de la bague ni au niveau de sa surface externe. L'encoche pourra ainsi délimiter un perçage plutôt qu'une rainure ou une ouverture.

L'encoche pourra volontairement être ménagée dans la bague ou pourra naturellement être présente dans la bague (en étant définie par exemple par l'espacement naturellement présent entre deux dents, typiquement si la bague est une rondelle à dents).

La bague pourra comprendre un plus grand nombre d'encoches que ce qui a été indiqué. De la même manière l'insert pourra comprendre un plus grand nombre d'encoches que ce qui a été indiqué pour accéder à la bague.

En remplacement ou en complément d'au moins une encoche, la bague pourra comprendre au moins un ergot dépassant du corps de bague, le pion de solidarisation temporaire comprenant de manière correspondante au moins une partie femelle apte à venir s'enticher sur ledit ergot pour lier le pion à la bague. Bien entendu l'ergot de la bague sera conformé pour ne pas gêner (hors le cas de raccord au pion) la liberté en rotation de la bague sur l'insert. Typiquement, l'ergot sera d'une longueur inférieure à celle de la gorge de l'insert recevant la bague.

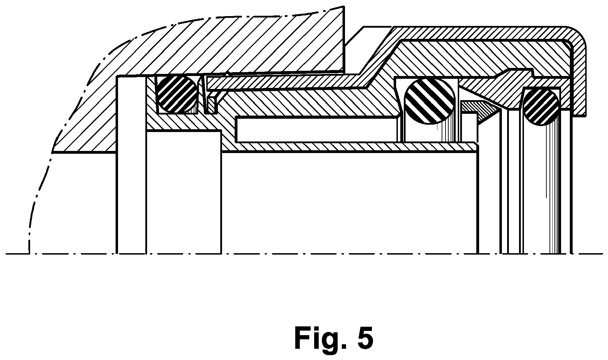

En outre, bien qu'ici la bague illustrée soit globalement conformée en un cylindre creux, la bague pourra présenter une longueur (selon la direction axiale) moins importante et être ainsi conformée en une rondelle comme cela est illustrée à la figure 5. La bague pourra ainsi présenter une pluralité d'encoches pour sa solidarisation temporaire à l'insert, chaque encoche étant naturellement formée par l'espace séparant deux dents consécutives de la rondelle. La bague pourra donc tout aussi bien être large qu'étroite. De la même manière le premier élément et le deuxième élément pourront être différents de ce qui a été indiqué. Ainsi bien qu'ici les deux tronçons de l'insert soient d'une seule pièce, les deux tronçons pourront être deux pièces séparées et fixées entre elles de manière non temporaire par collage, par soudage ... ou de manière temporaire par exemple par vissage. On pourra ainsi envisager d'agencer d'abord le premier tronçon dans le puit puis d'y reporter le deuxième tronçon.

Le puits pourra ainsi être d'une autre forme que celle indiquée. Par exemple le puits pourra être de section transversale cylindrique. En place d'un tube, le deuxième élément de circuit pourra être par exemple une canalisation ou bien encore un tuyau.

L'insert pourra également être différent de ce qui a été indiqué.

Ainsi, comme pour la bague, l'encoche pourra délimiter une rainure (externe ou interne), une ouverture (comme une fente) ou un perçage (c'est-à-dire que l'encoche n'est ni ouverte sur la surface externe de l'insert ni ouverte sur sa surface interne). Dans le mode de réalisation qui a été décrit, l'encoche est une rainure ménagée dans les parois externes de l'insert.

L'encoche pourra ainsi être formée par un perçage dans l'insert, perçage s'étendant entre la partie de l'insert agencée à l'extérieur du puits et la bague.

Par ailleurs bien qu'ici le dispositif soit conformé pour que l'insert comporte un organe de connexion au tube, l'insert pourra être conformé d'une autre manière par exemple en étant pourvu d'un raccord de tube, d'un coupleur, d'une tubulure crantée ... Le dispositif pourra ainsi s'affranchir de la paroi tubulaire de guidage du tube. Dans tous les cas, l'organe de connexion / le raccord / le coupleur / la tubulure crantée ... pourra être d'une pièce avec l'insert ou pourra être rapporté sur le corps de l'insert et solidarisé audit corps (par exemple par encliquetage, par frittage, par soudage ...)

En place d'une tête d'insert présentant une section hexagonale extérieure, la tête d'insert pourra présenter une autre forme. Il suffira d'adapter la clé qui viendra dévisser l'insert en conséquence. En outre, en remplacement ou en complément d'une coopération extérieur, la coopération pourra être interne. La tête d'insert pourra ainsi comprendre un ou des renfoncements apte à coopérer avec une clé à ergot par exemple (ou encore une pige) pour son dévissage.

En option, le jonc peut être remplacé par tout autre moyen connu d'accrochage instantané de tube comme une rondelle d'accrochage à dents flexibles ou une pince d'accrochage à bras flexibles.

Par ailleurs, la lèvre de protection du joint pourra être remplacée par tout autre élément connu de protection comme un bourrelet d'écrasement ou encore un deuxième joint d'étanchéité.

Les différents joints d'étanchéité pourront être des joints d'étanchéité annulaires en élastomère de section non torique.

Par outre, le pion et/ou l'outil de démontage pourront être différents de ce qui a été indiqué. Ainsi bien qu'ici le pion fasse partie de l'outil de démontage, le pion pourra être indépendant dudit outil. L'outil de démontage pourra par exemple être utilisé pour placer le pion entre la bague et l'insert, l'outil étant ensuite retiré en laissant le pion sur place. Par exemple dans le cas d'un pion seul celui-ci pourra être conformé pour s'étendre sur toute la longueur de la gorge dans laquelle la bague est agencée afin d'être bloqué entre les deux extrémités de la gorge. Si le pion est solidaire de l'outil ils pourront former une unique pièce ou être formés de deux pièces différentes rapportées l'une à l'autre (par collage, soudure, frittage, encliquetage ...). L'outil (qu'il comprenne ou non le pion) pourra être en métal, en plastique chargé ou non chargé ou en tout autre matière. L'outil (qu'il comprenne ou non le pion) pourra présenter une section transversale circulaire, rectangulaire, carré ... L'outil (qu'il comprenne ou le non le pion) pourra par ailleurs présenter une section constante sur toute sa longueur ou évolutive (et par exemple de plus en plus importante à mesure que l'on se rapproche du manche) ou bien encore variable selon la portion de l'outil considérée. L'outil (qu'il comprenne ou le non le pion) pourra ainsi être une lame c'est-à-dire présenter une section rectangulaire. La lame pourra être en tôle ou en plastique et par exemple fabriquée par injection. L'outil (qu'il comprenne ou le non le pion) pourra aussi être formé d'un fil c'est-à-dire présenter une section circulaire. Le fil pourra alors être en métal. Par ailleurs, l'outil et/ou le pion pourront prendre une autre forme que celles indiquées. En particulier, l'outil pourra ne pas comporter de rebord. Ou bien l'outil pourra comporter un rebord qui viendra en appui contre une face plane d'une collerette de l'insert par exemple. Bien entendu dans tous les cas le pion devra être lié en rotation à l'insert pour pouvoir prétendre lier en rotation la bague à l'insert. Le pion pourra également présenter d'autres dimensions que ce qui a été indiqué. Ainsi dans le cas où le pion coopère avec au moins une encoche de la bague qui n'est pas une fente, le pion pourra présenter une hauteur permettant sensiblement de combler un espace entre le fond de l'encoche et la paroi en vis-à-vis du puits.

## Revendications

1. Dispositif de raccordement d'un premier élément de circuit à un deuxième élément de circuit, le dispositif comprenant un insert (6) pourvu extérieurement de moyens d'ancrage dans un puits du premier élément de circuit, les moyens d'ancrage comprenant une bague (26) d'accrochage pourvue de dents saillant extérieurement d'un corps de la bague pour venir au contact du puits, les parties des dents en contact avec le puits s'étendant en pente entre deux extrémités axiales du puits et la bague étant montée libre en rotation dans une gorge de l'insert, l'insert comprenant au moins une encoche (34) par laquelle on peut accéder à la bague par l'extérieur du dispositif lorsque le dispositif est raccordé au premier élément de circuit afin d'y agencer de manière temporaire au moins un pion (32) de solidarisation en rotation de la bague à l'insert.

2. Dispositif selon la revendication 1, dans lequel la bague (26) comporte elle-même au moins une encoche (33) destinée à recevoir au moins en partie le pion de solidarisation.

3. Dispositif selon la revendication 2, dans lequel l'encoche (26) forme une fente dans la bague ou est un espace délimité par deux dents de la bague.

4. Dispositif selon la revendication 2 ou la revendication 3, dans lequel l'encoche (26) s'étend sur toute la hauteur de la bague.

5. Dispositif selon l'une des revendications précédentes, dans lequel au moins l'une des dents (28) est formée par découpe du corps de bague puis pliage et/ou conformage dudit corps.

6. Dispositif selon l'une des revendications précédentes dans lequel au moins une des dents (28) est bombée.

7. Dispositif selon l'une des revendications précédentes, dans lequel l'encoche de l'insert est un perçage traversant l'insert (6) depuis l'extérieur de l'insert jusqu'à déboucher dans la gorge de l'insert recevant la bague.

8. Dispositif selon l'une des revendications 1 à 6, dans lequel l'encoche (34) de l'insert est une rainure ménagée dans au moins une paroi externe de l'insert.

9. Ensemble comprenant un dispositif selon l'une des revendications précédentes et un pion (32) pour la solidarisation de la bague et de l'insert.

10. Ensemble selon la revendication 9, dans lequel une extrémité libre du pion (32) est biseautée, pointue ou bien encore arrondie.

11. Ensemble selon l'une des revendications 9 à 10 dans lequel le pion (32) est formé d'une lame ou d'un fil.

12. Ensemble selon l'une des revendications 9 à 11 dans lequel le pion (32) présente une hauteur correspondant sensiblement à celle de la gorge (8) de réception de la bague.

13. Ensemble selon l'une des revendications 9 à 12, dans lequel le pion (32) forme l'extrémité d'un outil de démontage du dispositif.

14. Ensemble selon la revendication 13, dans lequel l'outil présente un manche (38) prolongé d'une jambe (39) de jonction au pion.

15. Procédé de démontage de l'insert d'un dispositif selon l'une des revendications 1 à 4, comprenant les étapes de solidariser l'insert (6) et la bague (26) par l'intermédiaire du pion (32), puis de dévisser l'insert.

## Patentansprüche

1. Verbindungsvorrichtung zur Verbindung eines ersten Kreislaufelements mit einem zweiten Kreislaufelement, wobei die Vorrichtung einen Einsatz (6) umfasst, der außen mit Verankerungsmitteln zur Verankerung in einer Bohrung des ersten Kreislaufelements versehen ist, wobei die Verankerungsmittel einen Einhakring (26) umfassen, der mit Zähnen versehen ist, die außen von einem Körper des Rings vorstehen, um in Kontakt mit der Bohrung zu kommen, wobei sich die mit der Bohrung in Kontakt stehenden Teile der Zähne schräg zwischen zwei axialen Enden der Bohrung erstrecken und wobei der Ring in einer Nut des Einsatzes frei drehbar gelagert ist, wobei der Einsatz mindestens eine Kerbe (34) umfasst, über die man von außerhalb der Vorrichtung auf den Ring zugreifen kann, wenn die Vorrichtung an dem ersten Kreislaufelement angebracht ist, um dort temporär mindestens einen Stift (32) zur drehfesten Verbindung des Rings mit dem Einsatz anzuordnen.

2. Vorrichtung nach Anspruch 1, bei der der Ring (26) selbst mindestens eine Kerbe (33) umfasst, die dazu bestimmt ist, den Verbindungsstift zumindest teilweise aufzunehmen.

3. Vorrichtung nach Anspruch 2, bei der die Kerbe (26) einen Schlitz in dem Ring bildet oder ein Zwischenraum ist, der von zwei Zähnen des Rings begrenzt ist.

4. Vorrichtung nach Anspruch 2 oder Anspruch 3, bei der sich die Kerbe (26) über die gesamte Höhe des Rings erstreckt.

5. Vorrichtung nach einem der vorhergehenden Ansprüche, bei der mindestens einer der Zähne (28) durch Schneiden des Ringkörpers und anschließendes Biegen und/oder Formen des genannten Körpers gebildet wird.

6. Vorrichtung nach einem der vorhergehenden Ansprüche, bei der mindestens einer der Zähne (28) gewölbt ist.

7. Vorrichtung nach einem der vorhergehenden Ansprüche, bei der die Kerbe des Einsatzes eine Bohrung ist, die den Einsatz (6) von außerhalb des Einsatzes bis zum Münden in der Nut des Einsatzes, die den Ring aufnimmt, durchsetzt.

8. Vorrichtung nach einem der Ansprüche 1 bis 6, bei der die Kerbe (34) des Einsatzes eine Nut ist, die in mindestens einer Außenwand des Einsatzes ausgebildet ist.

9. Einheit, umfassend eine Vorrichtung nach einem der vorhergehenden Ansprüche und einen Stift (32) zur Verbindung des Rings und des Einsatzes.

10. Einheit nach Anspruch 9, bei der ein freies Ende des Stiftes (32) abgeschrägt, spitz oder auch abgerundet ist.

11. Einheit nach einem der Ansprüche 9 bis 10, bei der der Stift (32) aus einem Blatt oder einem Draht gebildet ist.

12. Einheit nach einem der Ansprüche 9 bis 11, bei der der Stift (32) eine Höhe aufweist, die im Wesentlichen der der Nut (8) zur Aufnahme des Rings entspricht.

13. Einheit nach einem der Ansprüche 9 bis 12, bei der der Stift (32) das Ende eines Demontagewerkzeugs der Vorrichtung bildet.

14. Einheit nach Anspruch 13, bei der das Werkzeug einen Schaft (38) aufweist, der um einen Schenkel (39) zur Verbindung mit dem Stift verlängert ist.

15. Verfahren zur Demontage des Einsatzes aus einer Vorrichtung nach einem der Ansprüche 1 bis 4, umfassend die Schritte des Verbindens des Einsatzes (6) und des Rings (26) mittels des Stifts (32) und des anschließenden Ausschraubens des Einsatzes.

## Claims

1. Device for connecting a first circuit element to a second circuit element, the device comprising an insert (6) provided externally with means for anchoring it in a well of the first circuit element, the anchoring means comprising an attachment ring (26) provided with teeth projecting externally from a body of the ring to come into contact with the well, the parts of the teeth in contact with the well extending obliquely between two axial ends of the well and the ring being freely rotatable in a groove of the insert, the insert comprising at least one notch (34) through which the ring can be accessed from the outside of the device when the device is connected to the first circuit element in order to arrange temporarily at least one pin (32) rotationally securing the ring to the insert.

2. Device according to claim 1, in which the ring (26) itself comprises at least one notch (33) intended to receive at least part of the securing pin.

3. Device according to claim 2, in which the notch (26) forms a slot in the ring or is a space delimited by two teeth of the ring.

4. Device according to claim 2 or claim 3, in which the notch (26) extends over the entire height of the ring.

5. Device according to any one of the preceding claims, in which at least one of the teeth (28) is formed by cutting the ring body and then bending and/or shaping said body.

6. Device according to any one of the preceding claims in which at least one of the teeth (28) is domed.

7. Device according to any one of the preceding claims, in which the notch of the insert is a bore passing through the insert (6) from the outside of the insert until it opens into the groove of the insert receiving the ring.

8. Device according to any one of claims 1 to 6, in which the notch (34) of the insert is a groove formed in at least one external wall of the insert.

9. Assembly comprising a device according to any one of the preceding claims and a pin (32) for securing the ring and the insert.

10. Assembly according to claim 9, in which a free end of the pin (32) is bevelled, pointed or even rounded.

11. Assembly according to any one of claims 9 to 10 in which the pin (32) is formed by a blade or a wire.

12. Assembly according to any one of claims 9 to 11 in which the pin (32) has a height substantially corresponding to that of the groove (8) for receiving the ring.

13. Assembly according to any one of claims 9 to 12, in which the pin (32) forms the end of a tool for demounting the device.

14. Assembly according to claim 13, in which the tool has a handle (38) extended by a leg (39) for joining it to the pin.

15. Method for demounting the insert of a device according to any one of claims 1 to 4, comprising the steps of joining the insert (6) and the ring (26) via the pin (32) and then unscrewing the insert.
